# EUROPEAN PATENT SPECIFICATION

(11) **EP 3 547 823 B1**
(45) Date of publication and mention of the grant of the patent: **05.08.2020**
(21) Application number: 17817152.6
(22) Date of filing: 28.11.2017
(51) Int. Cl.: A01G 9/02

(54) **BUILDING MODULE OF A VERTICAL GARDEN, A WALL OR A FENCE**
BAUMODUL EINES VERTIKALEN GARTENS, EINER WAND ODER EINES ZAUNS
MODULE DE CONSTRUCTION D'UN JARDIN VERTICAL, D'UNE PAROI OU D'UNE CLÔTURE

(30) Priority: 30.11.2016 IT 201600121556
(43) Date of publication of application: 09.10.2019
(73) Proprietor: Italmesh S.r.l., 25010 Montirone (Brescia) (IT); Garden Design di Mafezzoni Maurizio&C. S.n.c., 25010 Montirone (Brescia) (IT)
(72) Inventor: BARONCHELLI, Luca, I-25010 Montirone (Brescia) (IT); MAFEZZONI, Maurizio, I-25010 Montirone (Brescia) (IT)
(74) Representative: Pulieri, Gianluca Antonio
(86) International application number: PCT/IB2017/057449
(87) International publication number: WO 2018/100491

(56) References cited:
- EP-A1- 2 377 388
- WO-A1-2016/142283
- FR-A1- 2 924 896
- US-A1- 2011 059 518
- US-A1- 2011 197 504

## Description

The present invention pertains to the civil building sector, and in particular to the sector of components for building vertical gardens. The present invention, moreover, may be used as an element for making fences or a partition wall, for interiors or for exteriors.

Recently, the sector of components for building vertical gardens has shown considerable development.

Such gardens, usually built close to the facade of a building, perform both an aesthetic function, as the view of plants and shrubs is particularly pleasant, and a heat-regulating function, as they allow the facade behind, and thus the corresponding building environment, to be kept cooler.

However, the currently known solutions have some drawbacks.

For example, the known solutions must be assembled on site, often with considerable difficulty, and do not allow for easy replacement of any plants that have dried out, with significant degradation of the aesthetic effect. A building module of a vertical garden is known from document FR-A-2924896.

The object of the present invention is to provide a vertical garden (or a fence or a dividing wall) which overcomes the drawbacks referred to with reference to the prior art.

Such object is achieved with a building module for building a vertical garden according to claim 1 and a system according to claim 13. The dependent claims describe further embodiments of the invention.

The features and advantages of the building module according to the present invention will be apparent from the description given below, provided by way of nonlimiting example, in accordance with the appended figures, wherein:

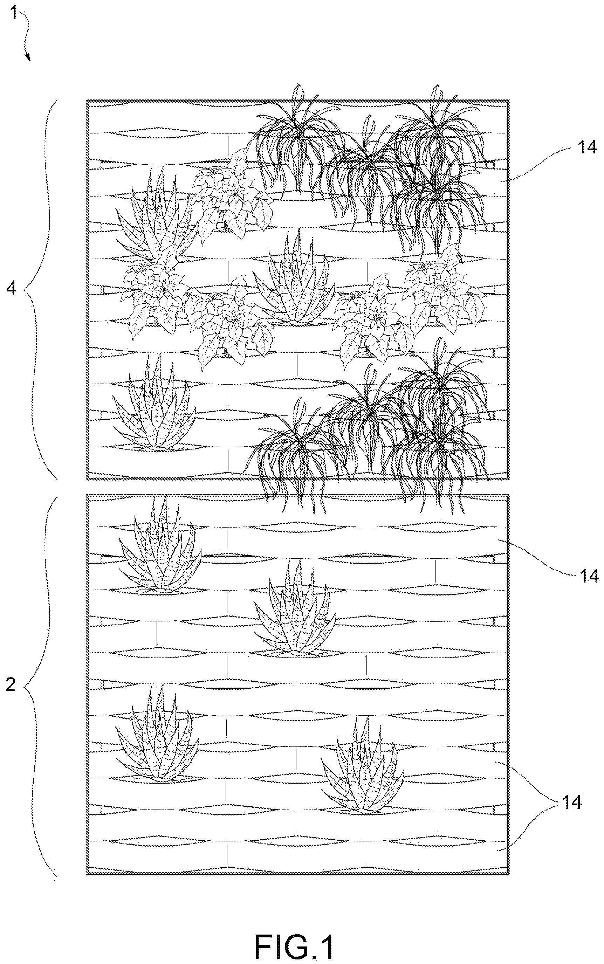

- figure 1 shows a vertical garden comprising a building module according to the present invention, in accordance with an embodiment;

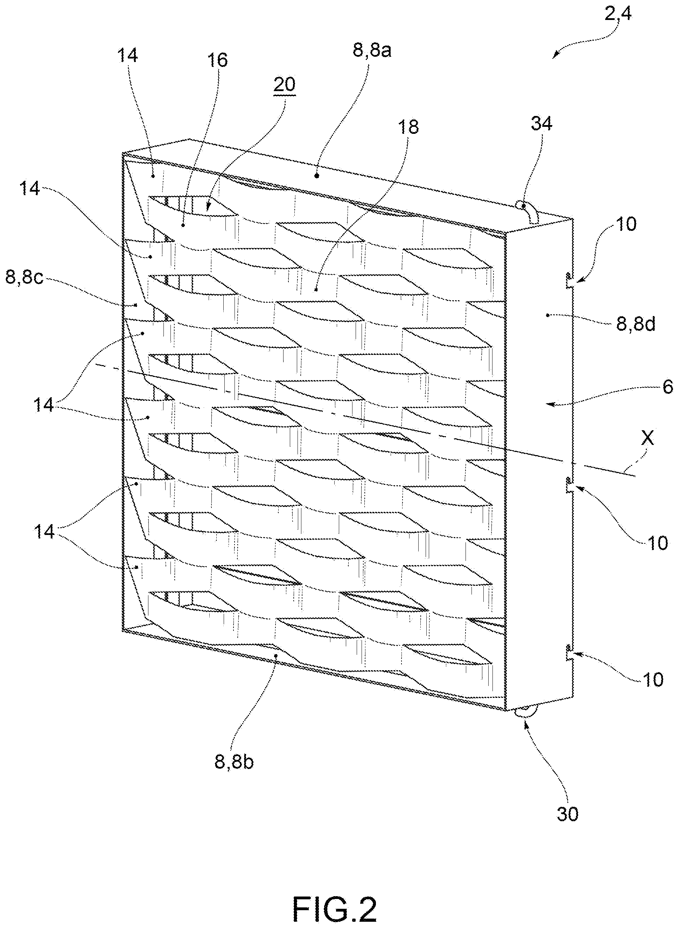

- figure 2 shows a building module according to an embodiment of the present invention, according to a front view;

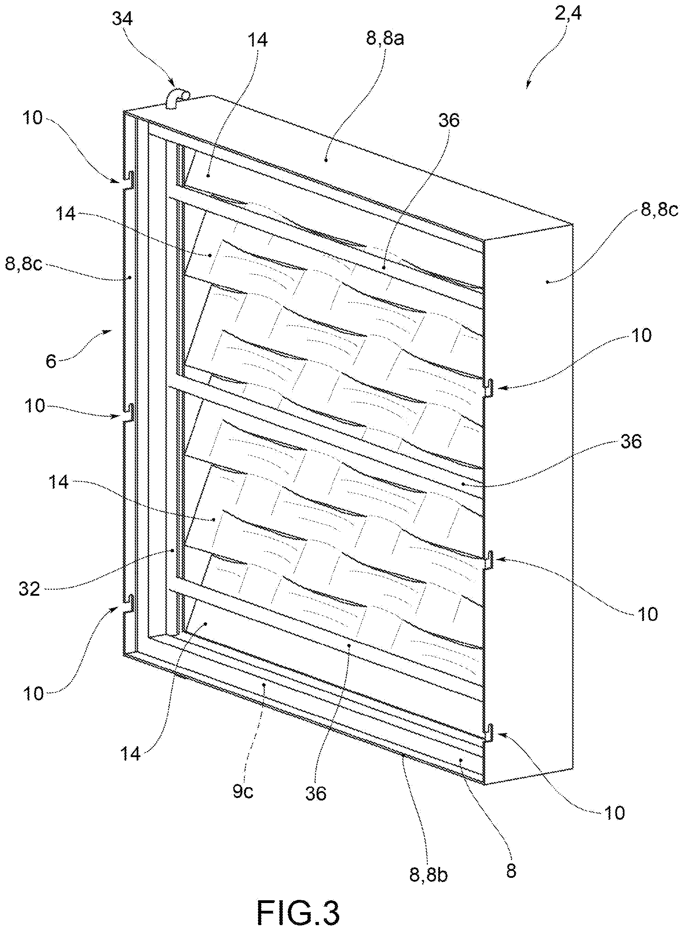

- figure 3 illustrates the building module of figure 2, according to a rear view;

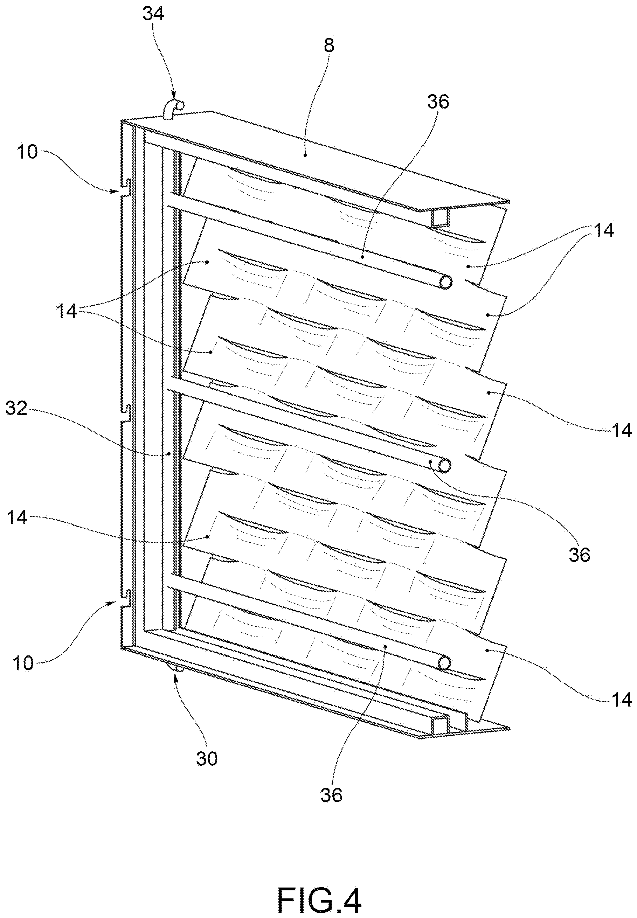

- figure 4 shows the building module of figure 3, partially in section;

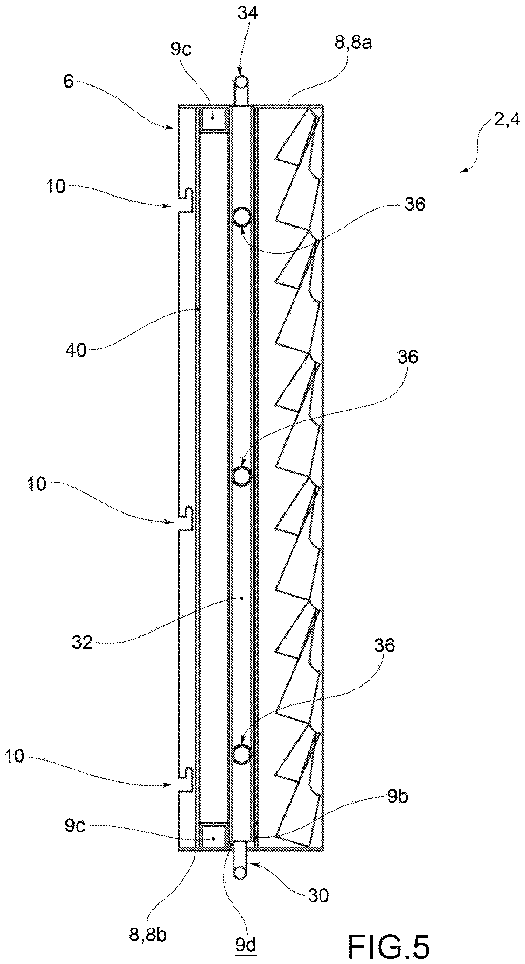

- figure 5 shows a sectional plan view of the building module according to the present invention; and
- figure 6 illustrates a sectional view of an extruded element of a box-like body of the building module, according to a preferred embodiment.

With reference to the enclosed figures, a vertical garden system applied to a facade of a building is indicated collectively at 1.

The system 1 comprises a support frame (not shown) applied to the facade, for example consisting of a pair of vertical columns, and at least one building module applied to the frame.

For example, according to the illustrated embodiment, the system 1 comprises two superposed modules 2, 4.

According to a preferred embodiment, the module 2 comprises a quadrangular box-shaped body 6 consisting of a plurality of elements 8, preferably made by extrusion.

For example, the elements 8 are all identical to each other and four in number, connected to each other at their respective ends so as to form the quadrangular box-like body.

In particular, the box-like body 6 is composed of an upper element 8a, a lower element 8b, a right element 8c, and a left element 8d.

Preferably, said elements 8, and in particular the right element 8c and the left element 8d, comprise at least one coupling region 10, for example three regions spaced out along the element for coupling the module to the support frame.

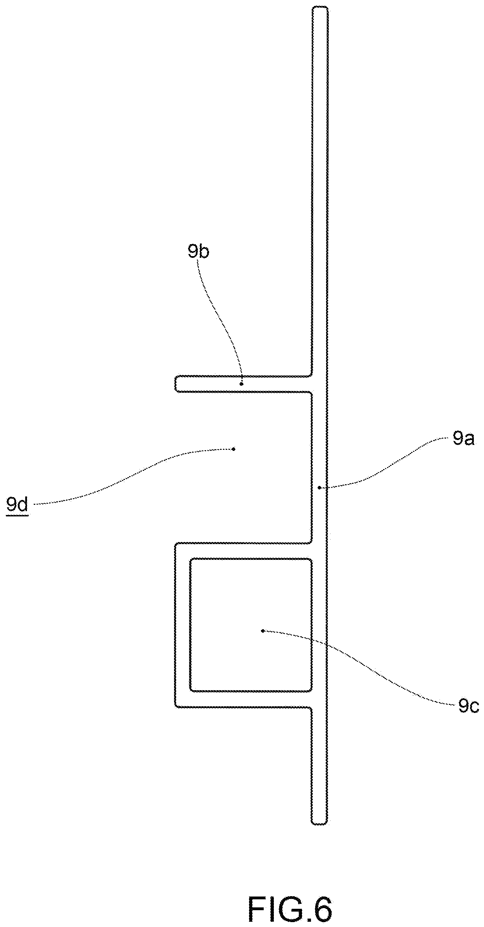

According to a preferred embodiment (figure 6), each element 6 has a section wherein may be recognized a main wall 9a facing the outside of the box-like body 6, a dividing partition 9b projecting internally from the main wall 9a, and an auxiliary chamber 9c, appropriately delimited. Furthermore, an auxiliary compartment 9d is defined between the dividing partition 9b and one of the walls of the auxiliary chamber 9c.

The box-like body 6 peripherally delimits the module 2, 4, while inside is housed a plurality of inclined bands 14, arranged superposed vertically, the outer surface of which forms the outer face of the box-like body.

Each band 14 extends along its own band axis X, arranged transversely between the vertical right element 8c and the vertical left element 8d.

Frontally, along said band axis X, each band 14 provides an undulated pattern which has a succession of arched portions 16 and flat portions 18.

Each arched section 16 therefore forms an opening 20 for the arrangement of one or more plants.

Preferably, the bands 14 are superposed vertically so that an arched portion 16 below corresponds to a flat portion 18 above.

Preferably, moreover, the bands 14 are joined together and made by bending a single sheet, so as to form a single front panel.

According to a preferred embodiment, moreover, the building module 2, 4 includes irrigation means suitable to be connected to the water network and to distribute water transversely, preferably at different heights.

For example, said irrigation means of the building module 2 comprise an inlet junction 30, projecting outwardly from the box-shaped body 6, for example from the lower element 8b, to connect to the water supply or irrigation means of a further upstream building module.

Furthermore, the irrigation means comprise at least one main duct 32 which extends vertically into the box-shaped body 6, connected upstream with the inlet junction 30 and downstream with an outlet junction 34 arranged outside the box-shaped body 6, for example on the upper element 8a.

For example, the main duct 32 is housed in the auxiliary compartment 9d of the right element 8c or the left element 8d.

The outlet junction 34 is intended to connect with irrigation means of a further downstream building module or simply plugged.

Furthermore, the irrigation means comprise at least one secondary duct 36 which extends transversely, for example horizontally, starting from the main duct 32 and plugged at the opposite end.

For example, three secondary ducts 36 placed at different heights are provided.

Said secondary ducts 36 are, for example, provided with a uniformly distributed porosity or provided with a plurality of separate openings for the water to exit.

According to a preferred embodiment, the main duct 32 and the secondary ducts 36 are composed of self-compensating tubes, i.e. suitably flexible tubes and provided with a distributed porosity which allows the dripping of the irrigation water to reach a predefined internal pressure, for example of 2.2 bar. Advantageously, this makes it possible to irrigate all the soil uniformly.

Preferably, the building module 2, 4 further comprises bulk soil, placed at the rear of the front panel, so as to fill the module and also cover the secondary ducts 36 of the irrigation means.

Preferably, said soil consists of a predefined quantity (for example, 50%) of organic material and a predefined quantity of (for example, 50%) inert material. Advantageously, this allows a light, non-compacted soil.

Furthermore, preferably, the building module 2, 4 comprises a breathable soil retention sheet (not shown), placed over the soil, between the soil and the anterior front panel. Preferably, said sheet is made of a non-woven fabric material.

Finally, the building module 2, 4 comprises a closure panel 40, placed above the retaining sheet and fixed to the box-shaped body 6.

The building module 2, 4 thus forms an independent module, already provided with or without soil, which may be prepared and shipped immediately or, if necessary, may be stored in stock and shipped when required.

According to a preferred embodiment, moreover, the building module 2, 4 comprises drainage means suitable to collect the water that has irrigated the soil and to channel it towards a drainage network.

Preferably, said drainage means are integrated with the box-like body.

For example, the drainage means comprise the auxiliary chamber 9c of the lower element 8b, provided with passage openings made toward the inside.

The water that has been distributed by the irrigation means collects on the bottom of the box-shaped body 6 at the lower element 8b, penetrates into the auxiliary chamber 9c through said passage openings, and is drained through said auxiliary chamber into a drainage network, through the vertical columns of the support frame.

According to a different application, the building module according to the present invention may be used to make a wall for interiors or exteriors, or a fence, possibly provided with a second front panel, so as to enable plants to be arranged both anteriorly and posteriorly.

According to one embodiment, moreover, the module is painted, at least externally, with a reflective paint (defined as "anti-heating") which allows sunlight to be reflected to limit the internal heating of the module.

According to a still further embodiment, the building module comprises a humidity sensor suitable to detect soil moisture and to generate a relative humidity signal, and transmission means to remotely transmit the humidity signal. Said modules may thus constitute a vertical garden system provided with management means suitable to receive the humidity signals, process them and transmit irrigation signals to said irrigation means to manage the irrigation according to a management program.

Innovatively, the building module according to the present invention overcomes the drawbacks of the prior art.

In effect, the module is already pre-assembled and, provided with or without soil; it may be shipped immediately after preparation or stored in stock and shipped as needed.

In other words, advantageously, the building module is pre-assembled to constitute an independent and transportable module.

Advantageously, moreover, it is not necessary to make an ad hoc irrigation system; it is in effect sufficient to connect the irrigation means to the water network.

According to a further advantageous aspect, the module according to the present invention is capable of retaining humidity, so as to perform the heat-regulating function very well.

According to an even more advantageous aspect, replacing the plants is very simple and quick, thus avoiding the aesthetic degradation of the garden.

Advantageously, moreover, each module is independent of the others, so that, even during the life cycle of the shrubbery contained therein, a module may be disassembled, for example from a wall or a facade, and placed in another position or with a different use.

Moreover, according to a further advantageous aspect, at the end of the life cycle of the shrubbery, the entire structure of which the module is a part may be disassembled, the soil and the shrubbery replaced, and the structure reassembled, reusing the same module, without further costs due to the structure itself.

According to a still further advantageous aspect, the structures made with the modules according to the invention have very low maintenance costs, yet are still able to maintain particularly luxuriant shrubbery. It is in effect possible to implement fertigation, i.e. fertilization of the soil with liquid fertilizers dissolved in the irrigation water. Fertigation has the advantage of distributing the fertilizer evenly in the soil, facilitating its absorption by the roots.

It is clear that one skilled in the art, in order to meet contingent needs, may make changes to the garden system described above, all contained within the scope of protection defined by the following claims.

## Claims

1. Building module (2,4) for making a vertical garden, a wall or a fence, comprising:
- a quadrangular box-shaped body (6) composed of an upper element (8a), a lower element (8b), a right element (8c) and a left element (8d), joined together;
- a plurality of bands (14) arranged inside the box-shaped body (6), superposed vertically, each having its extension along a horizontal band axis (X) between a right element (8c) and a left element (8d), wherein the grouping of the outer surfaces of said bands form the outer face of the box-shaped body;
- bulk soil which fills the module placed posteriorly to the plurality of bands (14);
- irrigation means suitable to be connected to a water network and to distribute the water transversely;
- drainage means suitable to collect irrigation water and channel it toward a drainage network, said drainage means being integrated with the box-shaped body;
- wherein each band (14) has a undulated pattern along said band axis (X) and comprises a plurality of arched portions (16) in succession, wherein each arched portion (16) defines an opening (20) for the arrangement of one or more plants;
- wherein said drainage means comprise an auxiliary chamber (9c) of the lower element (8b) of the box-shaped body (6), said chamber (9c) being provided with passage openings made toward the inside so that the water in excess collected on the bottom of the box-shaped body (6) at the lower element (8b) penetrates into said auxiliary chamber (9c) through said passage openings and is drained through said auxiliary chamber (9c) into a drainage network;
- wherein said building module is pre-assembled to constitute an independent transportable module.

2. Building module according to claim 1, wherein between one arched portion (16) and the next, a flat portion (18) is placed.

3. Building module according to claim 2, wherein the bands (14) are superposed vertically so that an arched portion (16) below corresponds to a flat portion (18) above.

4. Building module according to any one of the preceding claims, wherein each band (14) is made by folding a single sheet so as to form a single front panel.

5. Building module according to any of the preceding claims, wherein said irrigation means are suitable to distribute the water at different heights.

6. Building module according to any one of the preceding claims, wherein said irrigation means comprise at least one main duct (32) which extends vertically in the box-shaped body (6).

7. Building module according to claim 6, wherein the main duct (32) is housed in an auxiliary compartment (9d) of the right element (8c) or of the left element (8d) of the box-shaped body.

8. Module according to claim 6 or 7, wherein the irrigation means comprise at least a secondary duct (36) which extends transversely from the main duct (32), provided with a uniformly distributed porosity or provided with a plurality of separate openings for the exit of the water.

9. Building module according to any one of the preceding claims, comprising a sheet, for example made of breathable, non-woven fabric, placed between the soil and the front panel.

10. Building module according to any one of the preceding claims, wherein the soil consists of a predefined quantity of organic material and a predefined amount of inert material.

11. Building module according to any of the preceding claims, comprising:
- a humidity sensor suitable to detect soil moisture and generate a relative humidity signal; and
- transmission means for the remote transmission of the humidity signal.

12. Building module according to any one of the preceding claims, wherein the module is painted, at least externally, with a reflective paint to limit the internal heating of the module.

13. Vertical garden system comprising:
- a support frame comprising a pair of vertical columns, and
- at least one building module according to any one of the preceding claims, applied to the frame;
wherein the water distributed by the irrigation means collects on the bottom of the box-shaped body (6) corresponding to the lower element (8b), penetrates in the auxiliary chamber (9c) through said passage openings, and is drained through said auxiliary chamber into a drainage network through the vertical columns of the support frame.

14. Vertical garden system comprising:
- at least one building module according to any one of the preceding claims, when dependent on claim 11;
- management means suitable to receive humidity signals, process them, and transmit irrigation signals to said irrigation means to manage the irrigation according to a management program.

## Patentansprüche

1. Baumodul (2, 4) zur Herstellung eines vertikalen Gartens, einer Wand oder eines Zauns, umfassend:
- einen viereckigen, kastenförmigen Körper (6), der aus einem oberen Element (8a), einem unteren Element (8b), einem rechten Element (8c) und einem linken Element (8d) zusammengesetzt ist, die miteinander verbunden sind;
- eine Vielzahl von Bändern (14), die innerhalb des kastenförmigen Körpers (6), vertikal übereinandergelegt, angeordnet sind, wobei seine Erstreckung entlang einer horizontalen Bandachse (X) zwischen einem rechten Element (8c) und einem linken Element (8d) aufweist, wobei die Gruppierung der Außenoberflächen der Bänder im Verbund die äußere Stirnseite des kastenförmigen Körpers bildet;
- lose Erde, die das Modul füllt, die nach der Vielzahl von Bändern (14) platziert wird;
- Bewässerungsmittel, die dafür geeignet sind, an ein Wassernetz angeschlossen zu werden und das Wasser in Querrichtung zu verteilen;
- Entwässerungsmittel, die dafür geeignet sind, Bewässerungswasser zu sammeln und es in Richtung eines Entwässerungsnetzes zu kanalisieren, wobei die Entwässerungsmittel in dem kastenförmigen Körper integriert sind;
- wobei jedes Band (14) eine wellenförmige Struktur entlang der Bandachse (X) aufweist und eine Vielzahl von aufeinanderfolgenden gewölbten Abschnitten (16) umfasst, wobei jeder gewölbte Abschnitt (16) eine Öffnung (20) zur Anordnung einer oder mehrerer Pflanzen definiert;
- wobei die Entwässerungsmittel eine Nebenkammer (9c) des unteren Elements (8b) des kastenförmigen Körpers (6) umfassen, wobei die Kammer (9c) mit Durchflussöffnungen versehen ist, die in Richtung der Innenseite ausgebildet sind, sodass das überschüssige Wasser, das am Boden des kastenförmigen Körpers (6) an dem unteren Element (8b) gesammelt wird, durch die Durchflussöffnungen hindurch in die Nebenkammer (9c) eindringt und über die Nebenkammer (9c) in ein Entwässerungsnetz abgeleitet wird;
- wobei das Baumodul vormontiert ist, um ein eigenständiges transportfähiges Modul zu bilden.

2. Baumodul nach Anspruch 1, wobei zwischen einem gewölbten Abschnitt (16) und dem nächsten ein flacher Abschnitt (18) platziert ist.

3. Baumodul nach Anspruch 2, wobei die Bänder (14) so vertikal übereinandergelegt sind, dass ein darunterliegender gewölbter Abschnitt (16) einem darüberliegenden flachen Abschnitt (18) entspricht.

4. Baumodul nach einem beliebigen der vorhergehenden Ansprüche, wobei jedes Band (14) durch Falten einer einzelnen Bahn hergestellt wird, um so eine einzelne Frontplatte auszubilden.

5. Baumodul nach einem beliebigen der vorhergehenden Ansprüche, wobei die Bewässerungsmittel dafür geeignet sind, das Wasser in verschiedenen Höhen zu verteilen.

6. Baumodul nach einem beliebigen der vorhergehenden Ansprüche, wobei die Bewässerungsmittel mindestens eine Hauptleitung (32) umfassen, die sich in dem kastenförmigen Körper (6) vertikal erstreckt.

7. Baumodul nach Anspruch 6, wobei die Hauptleitung (32) in einem Nebenfach (9d) des rechten Elements (8c) oder des linken Elements (8d) des kastenförmigen Körpers untergebracht ist.

8. Modul nach Anspruch 6 oder 7, wobei die Bewässerungsmittel mindestens eine Sekundärleitung (36), die sich von der Hauptleitung (32) in Querrichtung erstreckt, umfassen, die mit gleichmäßig verteilten Poren versehen ist oder mit einer Vielzahl von separaten Öffnungen für den Austritt des Wassers versehen ist.

9. Baumodul nach einem beliebigen der vorhergehenden Ansprüche, umfassend eine Bahn, beispielsweise hergestellt aus atmungsaktivem Faserstoff, die zwischen der Erde und der Frontplatte platziert ist.

10. Baumodul nach einem beliebigen der vorhergehenden Ansprüche, wobei die Erde aus einer vorbestimmten Menge organischen Materials und einer vorbestimmten Menge inerten Materials besteht.

11. Baumodul nach einem beliebigen der vorhergehenden Ansprüche, umfassend:
- einen Feuchtigkeitssensor, der dafür geeignet ist, die Feuchtigkeit der Erde zu erfassen und ein Signal relativer Feuchtigkeit zu erzeugen; und
- Übertragungsmittel zur Fernübertragung des Feuchtigkeitssignals.

12. Baumodul nach einem beliebigen der vorhergehenden Ansprüche, wobei das Modul, zumindest außen, mit einer reflektierenden Farbe angestrichen ist, um die innere Erwärmung des Moduls zu begrenzen.

13. Vertikales Gartensystem, umfassend:
- einen Stützrahmen, der ein Paar von vertikalen Säulen umfasst, und
- mindestens ein Baumodul nach einem beliebigen der vorhergehenden Ansprüche, das an dem Rahmen angebracht ist;
wobei sich das Wasser, das durch die Bewässerungsmittel verteilt wird, am Boden des kastenförmigen Körpers (6), der dem unteren Element (8b) entspricht, sammelt, durch die Durchflussöffnungen in die Nebenkammer (9c) eindringt und über die Nebenkammer durch die vertikalen Säulen des Stützrahmens hindurch in ein Entwässerungsnetz abgeleitet wird.

14. Vertikales Gartensystem, umfassend:
- mindestens ein Baumodul nach einem beliebigen der vorhergehenden Ansprüche in Abhängigkeit von Anspruch 11;
- Verwaltungsmittel, die dafür geeignet sind, Signale relativer Feuchtigkeit zu empfangen, diese zu verarbeiten und Bewässerungssignale an die Bewässerungsmittel zu senden, um die Bewässerung gemäß einem Verwaltungsprogramm zu steuern.

## Revendications

1. Module de construction (2, 4) pour fabriquer un jardin vertical, une paroi ou une clôture, comprenant :
- un corps en forme de boîte quadrangulaire (6) composé d'un élément supérieur (8a), d'un élément inférieur (8b), d'un élément droit (8c) et d'un élément gauche (8d), joints ensemble ;
- une pluralité de bandes (14) agencées à l'intérieur du corps en forme de boîte (6), superposées verticalement, chacune ayant son extension le long d'un axe de bande horizontal (X) entre un élément droit (8c) et un élément gauche (8d), dans lequel le regroupement des surfaces externes desdites bandes forme la face externe du corps en forme de boîte ;
- de la terre en vrac qui remplit le module placé postérieurement à la pluralité de bandes (14) ;
- des moyens d'irrigation appropriés pour être raccordés à un réseau d'eau et pour distribuer l'eau transversalement ;
- des moyens de drainage appropriés pour collecter de l'eau d'irrigation et la canaliser vers un réseau de drainage, lesdits moyens de drainage étant intégrés au corps en forme de boîte ;
- dans lequel chaque bande (14) présente un motif ondulé le long dudit axe de bande (X) et comprend une pluralité de portions arquées (16) en succession, dans lequel chaque portion arquée (16) définit une ouverture (20) pour l'agencement d'une ou de plusieurs plantes ;
- dans lequel lesdits moyens de drainage comprennent une chambre auxiliaire (9c) de l'élément inférieur (8b) du corps en forme de boîte (6), ladite chambre (9c) étant munie d'ouvertures de passage ménagées vers l'intérieur de sorte que l'eau en excès collectée sur le fond du corps en forme de boîte (6) au niveau de l'élément inférieur (8b) pénètre dans ladite chambre auxiliaire (9c) à travers lesdites ouvertures de passage et soit drainée à travers ladite chambre auxiliaire (9c) dans un réseau de drainage ;
- dans lequel ledit module de construction est préassemblé pour constituer un module transportable indépendant.

2. Module de construction selon la revendication 1, dans lequel entre une portion arquée (16) et la suivante, est placée une portion plate (18).

3. Module de construction selon la revendication 2, dans lequel les bandes (14) sont superposées verticalement de sorte qu'une portion arquée (16) au-dessous corresponde à une portion plate (18) au-dessus.

4. Module de construction selon l'une quelconque des revendications précédentes, dans lequel chaque bande (14) est ménagée par pliage d'une feuille unique de façon à former un panneau avant unique.

5. Module de construction selon l'une quelconque des revendications précédentes, dans lequel lesdits moyens d'irrigation sont appropriés pour distribuer l'eau à des hauteurs différentes.

6. Module de construction selon l'une quelconque des revendications précédentes, dans lequel lesdits moyens d'irrigation comprennent au moins un conduit principal (32) qui s'étend verticalement dans le corps en forme de boîte (6).

7. Module de construction selon la revendication 6, dans lequel le conduit principal (32) est logé dans un compartiment auxiliaire (9d) de l'élément droit (8c) ou de l'élément gauche (8d) du corps en forme de boîte.

8. Module selon la revendication 6 ou 7, dans lequel les moyens d'irrigation comprennent au moins un conduit secondaire (36) qui s'étend transversalement depuis le conduit principal (32), muni d'une porosité distribuée de manière uniforme ou muni d'une pluralité d'ouvertures séparées pour la sortie de l'eau.

9. Module de construction selon l'une quelconque des revendications précédentes, comprenant une feuille, par exemple constituée d'une étoffe non tissée respirante, placée entre la terre et le panneau avant.

10. Module de construction selon l'une quelconque des revendications précédentes, dans lequel la terre est constituée d'une quantité prédéfinie de matière organique et d'une quantité prédéfinie de matière inerte.

11. Module de construction selon l'une quelconque des revendications précédentes, comprenant :
- un capteur d'humidité approprié pour détecter une humidité de terre et générer un signal d'humidité relative ; et
- des moyens de transmission pour la transmission à distance du signal d'humidité.

12. Module de construction selon l'une quelconque des revendications précédentes, dans lequel le module est peint, au moins de manière externe, avec une peinture réfléchissante pour limiter l'échauffement interne du module.

13. Système de jardin vertical comprenant :
- un cadre de support comprenant une paire de colonnes verticales, et
- au moins un module de construction selon l'une quelconque des revendications précédentes, appliqué au cadre ;
dans lequel l'eau distribuée par les moyens d'irrigation se collecte sur le fond du corps en forme de boîte (6) correspondant à l'élément inférieur (8b), pénètre dans la chambre auxiliaire (9c) à travers lesdites ouvertures de passage, et est drainée à travers ladite chambre auxiliaire dans un réseau de drainage à travers les colonnes verticales du cadre de support.

14. Système de jardin vertical comprenant :
- au moins un module de construction selon l'une quelconque des revendications précédentes, lorsqu'elles dépendent de la revendication 11 ;
- des moyens de gestion appropriés pour recevoir des signaux d'humidité, les traiter, et transmettre des signaux d'irrigation auxdits moyens d'irrigation afin de gérer l'irrigation selon un programme de gestion.
